# EUROPEAN PATENT SPECIFICATION

(11) **EP 2 400 716 B1**
(45) Date of publication and mention of the grant of the patent: **25.11.2015**
(21) Application number: 11171238.6
(22) Date of filing: 23.06.2011
(51) Int. Cl.: H04L 29/06

(54) **Resource access proxy for efficient access to sensor resources**
Proxy für Ressourcenzugriff für effizienten Zugriff auf Sensorressourcen
Proxy d'accès aux ressources pour un accès efficace aux ressources de capteur

(30) Priority: 23.06.2010 GB 201010590
(43) Date of publication of application: 28.12.2011
(73) Proprietor: Thales Holdings UK Plc, Addlestone, Near Weybridge, Surrey KT15 2NX (GB)
(72) Inventor: Waller, Adrian, Reading, Berkshire RG2 0SB (GB)
(74) Representative: Round, Edward Mark

(56) References cited:
- US-A1- 2004 128 542
- US-A1- 2008 046 984

## Description

This invention is related to access control provision for web services. In particular, the invention is concerned with the provision of access control in an efficient manner, providing single sign-on for users across multiple administrative domains in a web services identity federation.

Identity federation is a broad concept covering a number of specific implementations. It is also in current development, thus the meaning of the term is susceptible to change. However, the broad principle consistently covered by the term is that of uniting user authentication processes across multiple IT systems or organisations.

For the purpose of this particular disclosure, reference is made to the SENSEI project in the EU's Seventh Framework Programme, further details of which can be found at www.sensei-project.eu.

By way of background, the nature of the SENSEI project will now be briefly described. The SENSEI project has as its core aim the development of the internet to render it "smarter". That is, the intention is to develop technology which enables the internet to relate more effectively to real world conditions, by the collection and sharing of information.

The internet currently provides a significant resource for the collection and storage of information for access by individual users at remote locations. By the use of distributed networks, information can be readily transported from a storage location to an access location such as a computer, portable digital device, mobile telephone, and so on.

The SENSEI project aims to enhance this experience by the sharing of information and intelligent integration thereof, to provide users with useful collations of information which might "push" solutions thereto which might otherwise not be evident.

Various approaches to identity federation already exist, such as Liberty Alliance, the WS-* standards and the SAML Web SSO Profile. These require a user to contact several parties and perform several operations to gain access to a service in another 3007456-1-rmilo domain. In particular, a user has to incur the overhead of setting up a security session directly with each service. For the particular case of services providing access to sensor data, a user may wish to access multiple such services rapidly, in order to aggregate or fuse data, and may only need a very small amount of data from each service. In such a case, the overhead incurred by standard approaches is highly significant and may even make them impractical.

Prior art document US 2004/0128542 discloses access to resources in different domains using a resource proxy and a point of contact server for each access.

The present disclosure is directed to web enabled sensors, and to a situation wherein sensor resources are being accessed. However, the reader will appreciate that this approach could be useful more generally for other (non-sensor related) applications that have similar interaction patterns.

An aspect of the present invention provides a proxy service capable of handling initial access by a user to the services in its domain. An operational feature of at least one specific embodiment implementing this approach is not only that it relieves the user of overhead by placing it on a highly capable central resource, but also that by reusing pre-existing security sessions that the Resource Access Proxy Service has with the access control components and resources in its domain, the overheads of setting these up are avoided.

In addition, the returned "Security Context Tokens" allow the user to make further requests to the resources directly without incurring the overhead of setting up security sessions, and without overloading the Resource Access Proxy Service. It should be noted that the use of Security Context Tokens to bootstrap security sessions in this way has been proposed before, but not in combination with the Resource Access Proxy Service invention described here (note that the Resource Access Proxy Service is novel in its own right as well).

An aspect of the invention provides a method of controlling access by a resource user to one or more data resources in a network, the method comprising obtaining, at the commencement of a session of connectivity of a resource user to a network, an attribute token from an issuer controlling access by the resource user to the network; for each resource, at the commencement of a session of connectivity of said resource to the network, establishing a secure session with a resource access proxy in the network; sending a request from the resource user to the resource access proxy, the request containing said attribute token; determining at said resource access proxy, on the basis of the attribute token, if a previous request has been received from said resource user in the said session and, if so then forwarding said request including said attribute token to said resource, otherwise translating said attribute token into a format suitable for use with said resource; returning said translated attribute token to said resource user for future use in said session; and forwarding said request including said translated attribute token to said resource.

The method may include generating a security token on the basis of the request from the resource user to the resource, and sending the security token to the resource user for use in future requests to said resource.

On receipt of the request by the resource, the method may include determining if said request should be authorised and, if so, complying with said request and sending any data consequent on said request back to said resource user.

Said determining if said request should be authorised may comprise applying a policy decision in accordance with a predetermined policy decision rule.

Said consequent data, said translated attribute token if generated, and said security token may be sent to said resource user in tandem.

Said issuer controlling access by said resource user to the network may be hosted on a framework provider for the resource user.

Said resource access proxy may be hosted on a framework provider for the resource.

Another aspect of the invention comprises a method of accessing a resource by a resource user comprising gaining access in accordance with the above aspect of the invention and using said security token for subsequent access in said session.

Another aspect of the invention comprises a method of authorising a request for access by a resource user to a resource in a network, comprising, on receipt of an access request from a resource user, the request comprising an attribute token from an issuer controlling access by the resource user to the network; establishing a secure session with a resource access proxy in the network; determining, on the basis of the attribute token, if a previous request has been received from said resource user in the said session and, if so then forwarding said request including said attribute token to said resource, otherwise translating said attribute token into a format suitable for use with said resource, sending said translated attribute token to said resource user for future use in said session and forwarding said request including said translated attribute token to said resource.

Another aspect of the invention comprises a method of requesting data from a resource comprising obtaining, at the commencement of a session of connectivity of a resource user to a network, an attribute token from an issuer controlling access by the resource user to the network; for each resource, at the commencement of a session of connectivity of said resource to the network, establishing a secure session with a resource access proxy in the network; and sending a request from the resource user to the resource access proxy; wherein said method further comprises, on receipt of a message from said resource access proxy containing a translated attribute token suitable for use with said resource, storing said translated attribute token; such that in the event that said sending of a request is the first instance thereof in said session, said request contains said attribute token, whereas in the event that said resource user has already stored a translated attribute token, said request contains said translated attribute token.

Another aspect of the invention comprises a resource access proxy for use in controlling access by a resource user of one or more resources in a network, the resource access proxy comprising access request receiving means operable to receive a request by a resource user for access to a resource; request processing means operable to determine if said request contains an attribute token and, if so, whether said attribute token is applicable for use with said resource; attribute token translation means operable to translate an attribute token not applicable for use with said resource into a translated attribute token applicable for use with said resource; authorisation means operable to determine if said request for access to said resource should be authorised; and proxy requesting means operable to send a request, on behalf of a resource user, in response to receipt of a request, and authorisation thereof, to a resource.

The resource access proxy may comprise security token issuing means operable to issue a security token in response to a request from a resource user, the resource access proxy being operable to send an issued security token back to a requesting resource user such that said resource user can obtain direct access to said resource for a future request.

The request processing means may be operable to determine if said attribute token is a translated attribute token and, if so, to pass said attribute token directly for use by said proxy requesting means.

The resource access proxy may further comprise response means operable to return data to a requesting resource user.

The response means may be operable to return data the consequence of a request.

The response means may be operable to return a translated attribute token if generated by said attribute token translation means.

Whereas aspects of the invention have been noted above as being apparatus or processes, the skilled reader will appreciate that, given the field of the invention, it may be implemented by way of a computer program product, suitable to configure a general purpose computer to perform an aspect of the invention as set out above as a process, or to configure such a computer as apparatus in line with a respective aspect of the invention. Such a computer program product will contain computer executable instructions, which may be stored on a readable storage medium (such as an optical disk or a readable mass storage device) or carried on a receivable signal (such as a downloadable file, whether compressed or otherwise). No limitation to the invention is to be implied by the manner in which it is exemplified herein.

A specific embodiment of the invention will now be described with reference to the accompanying drawings, in which:
Figure 1 is a schematic diagram of a network including a specific embodiment of the invention;
Figure 2 is a schematic diagram of a resource user in the network of figure 1;
Figure 3 is a schematic diagram of a program storage unit of the resource user of figure 2;
Figure 4 is a schematic diagram of a framework provider for the resource unit of figure 2;
Figure 5 is a schematic diagram of a program storage unit of the framework provider of figure 4;

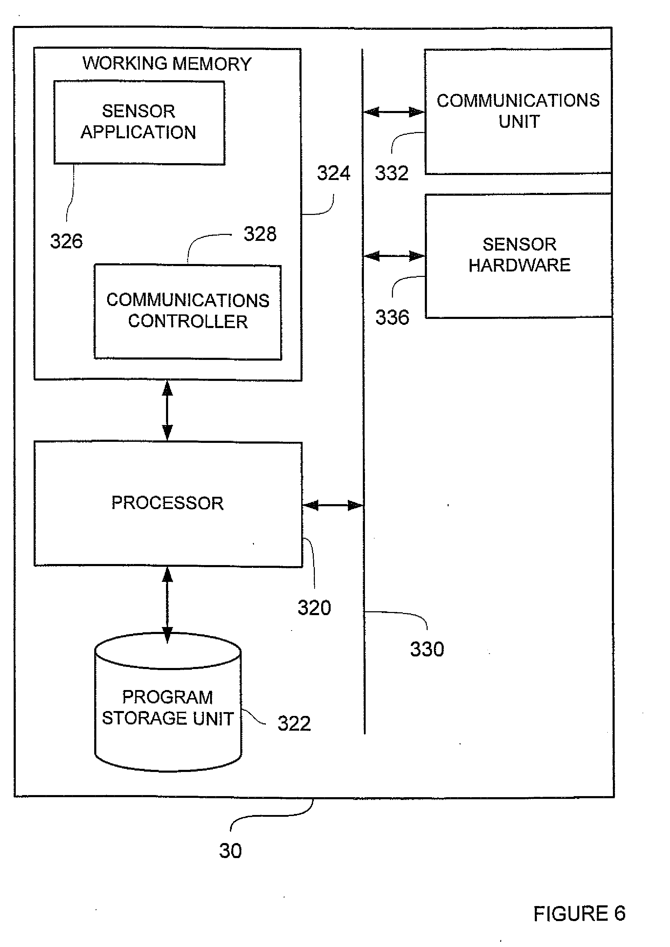

Figure 6 is a schematic diagram of a resource in the network of figure 1;

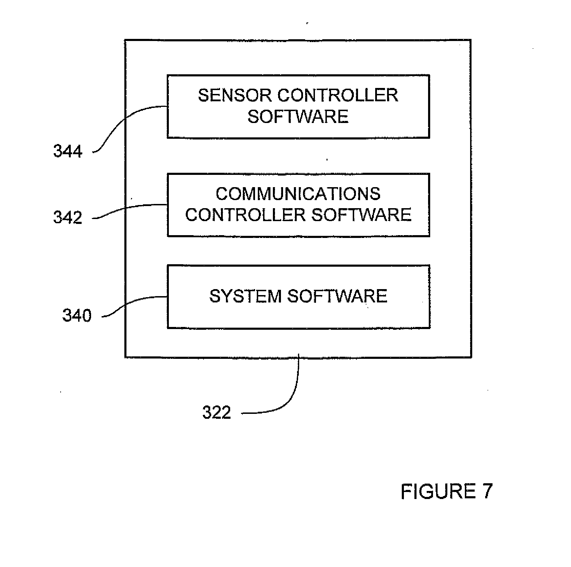

Figure 7 is a schematic diagram of a program storage unit of the resource of figure 6;
Figure 8 is a schematic diagram of a framework provider for the resource in the network of figure 1;
Figure 9 is a schematic diagram of a program storage unit of the framework provider of figure 8; and
Figure 10 is a schematic diagram of a process carried out in authorisation of a request made by the resource user of the resource.

As set out in "The SENSEI Real World internet Architecture" published by SENSEI in March 2010, the current internet is characterised by information which has been created or entered by humans, and is often only available by human readable interfaces. The intention of the SENSEI project is to develop this infrastructure into one which is much more able to handle information captured or generated automatically. The digital world so abstracted can be described as consisting of "resources" (namely sensors, actuators and processing elements), "entities of interest" (Eol - representing people, places or things in the real world) and "resource users" (people or computerised applications making use of interactions with resources and Eol).

The present embodiment is concerned with the access of resources by resource users, in the above nomenclature.

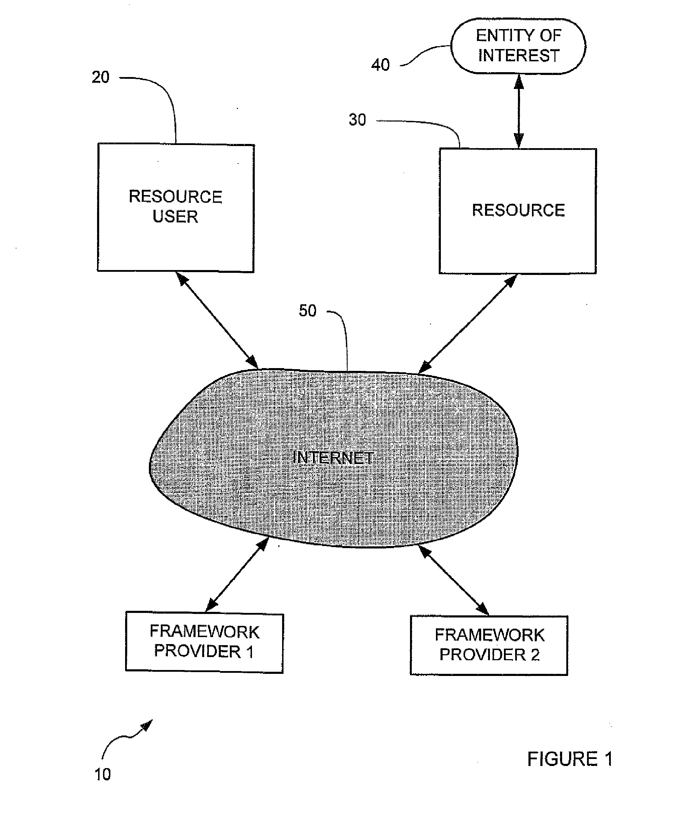

As illustrated in figure 1, a system 10 is shown in schematic form to allow a resource user 20 to gain access to information gathered by a resource 30 about the status of an entity of interest 40. This is done by communication via the internet 50, and the resource user gains access to the resource using a resource access proxy service implemented by a framework provider 60 for the resource user 20 acting in tandem with a framework provider 70 for the resource 30.

By using the resource access proxy service so described, the resource user can gain access to sensor data or perform actuations in an efficient way across administrative domains.

In the illustrative example, the resource user 20 is registered in one domain whereas the resource 30 is registered in another domain. For the benefit of the reader, and for clarity, the resource user 20 is in this case a computer controlled by a human operator, but the example would equally be possibly implemented with the resource user being a self controlled machine.

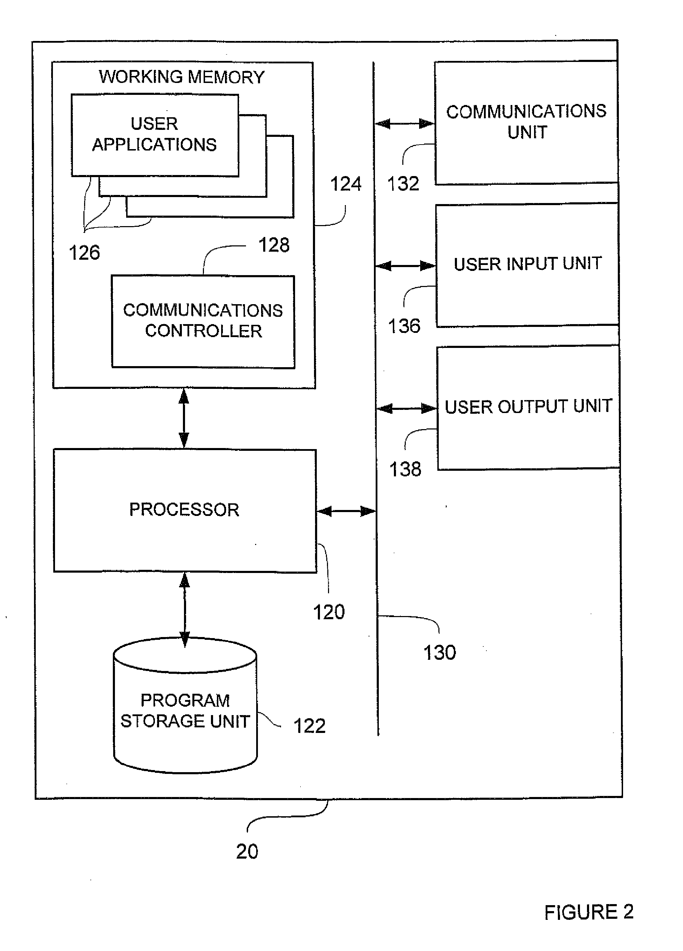

The resource user 20 is illustrated in further detail in figure 2. This figure is a schematic diagram of the architecture of the resource user 20. The resource user 20 is in this example implemented by way of a general purpose computer configured by suitable communications equipment and software. This arrangement will be familiar to the user. A more specialised form of original equipment could alternatively be provided.

In the present example, the resource user 20 comprises a processor 120 connected to a program storage unit 122, storing computer programs to be executed by the processor 120. Working memory 124 is illustrated, providing fast access memory means to enable effective execution of user applications 126 by the processor 120. A communications controller 128 is also defined in memory, whose execution by the processor 120 cooperates in controlling a communications unit 132. The communications unit 132 establishes wireless or wired communication with other computing devices as required, preferably by use of the internet.

A user input unit 136 is provided. This can be in the form of a keyboard, a mouse, or audio input means such as speech recognition means (for which further software means may need to be provided) and so on. A user output means 138 is further provided, which can be a display, audio output means, and so on.

A communications bus 130 is further provided as will be familiar to the reader.

The reader will appreciate that the foregoing basic description of a computer is open to variation in line with commercially available equipment and the expectation that fundamental architectures of computers and related technologies can change over time.

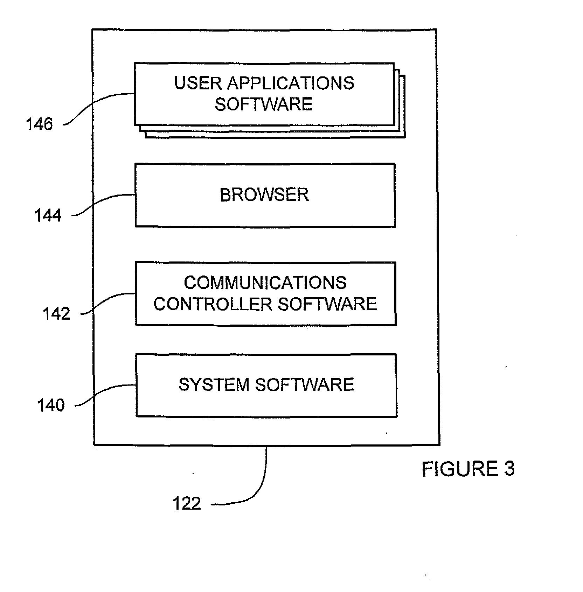

As illustrated in figure 3, the program storage unit 122 stores system software 140 of standard type (for example an operating system and associated programs to enable basic computing tasks to be undertaken), communications controller software 142 sufficient to define the communications controller 128 previously described, a browser 144 and user applications software 146 suitable to define the user applications 126 previously described and illustrated.

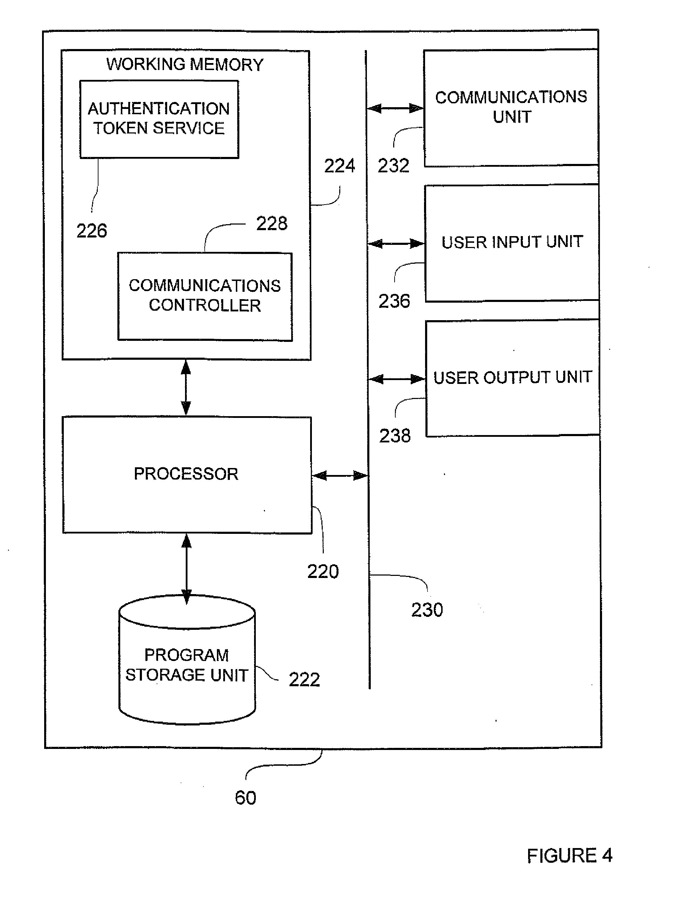

With reference to figure 4, computer architecture of a framework provider 60 is illustrated. As will be understood by the reader, there are similarities between all computer hardware and, where possible, components corresponding with those of the previously described resource user 20 have reference numerals advanced therefrom by 100. In exception to that, the working memory 224 stores an authentication token service 226 for execution by the processor 220. This authentication token service is intended to enable the resource user 20 to seek and obtain an authentication for use in the resource access process as will be described in due course.

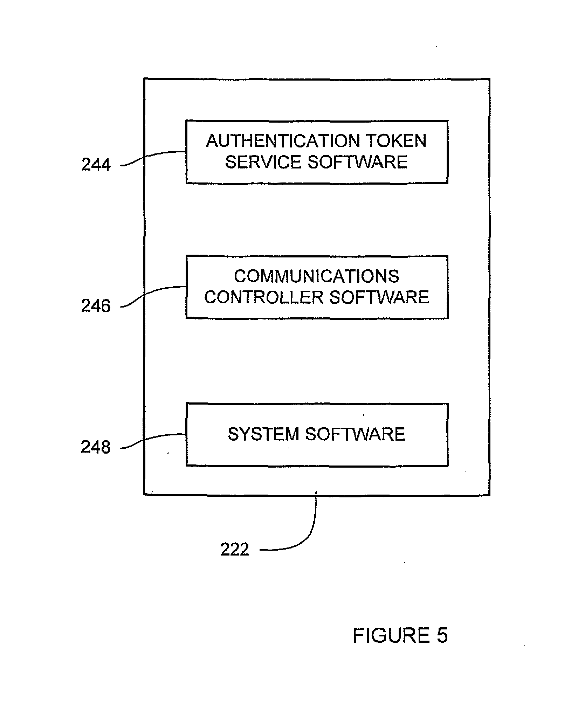

As such, figure 5 illustrates software stored in the program storage unit 222 of the framework unit 60. As will be appreciated, this figure only illustrates those items of software relevant to the present disclosure. To that end, system software, 240 and communications software 242 are provided as before, and authentication token service software 244 is provided to enable implementation of the authentication token service described above.

Likewise, the resource 30 comprises a general purpose computer in generally the same form as for previous elements of the network. For this case, the elements common to the resource 30 and the resource user 20 are distinguished by reference number- those of the resource 30 being advanced by 200 from those of the resource user 20.

In exception to that, the resource 30 as illustrated lacks user input or output means. In a resource of the described type, this is unnecessary. In the present case, it is expected that the resource will be in the form of a sensor, such as a traffic flow sensor, temperature sensor and so on, and for reasons of compactness, cost, power consumption and general practicality, user I/O can be considered superfluous. User I/O might be provided as required by a connectable unit.

Instead, reference number 336 is applied to a sensor hardware unit, which is the physical equipment necessary to enable measurement of a physical external condition. This might be, for example, a thermocouple and associated electronic circuitry, a video cameral to capture image data, or any other form of data capture equipment. The actual use is not necessary for an understanding of the present example of the invention. Corresponding to this, a sensor application 326 runs in working memory 324 executed by the processor 320.

It will be appreciated by the skilled reader that, in an alternative arrangement, the sensor hardware could be implemented in another device or on another platform, with the resource acting as a gateway between a resource user and the sensor platform. Moreover, while the present embodiment is described with respect to a sensor, or other data capture device, in another embodiment the resource could be associated with an actuator and operable to respond to requests by performing some form of actuation.

As will now be understood by the reader, the program storage unit 322 thus stores system software 340, communications controller software 342 and sensor controller software 344.

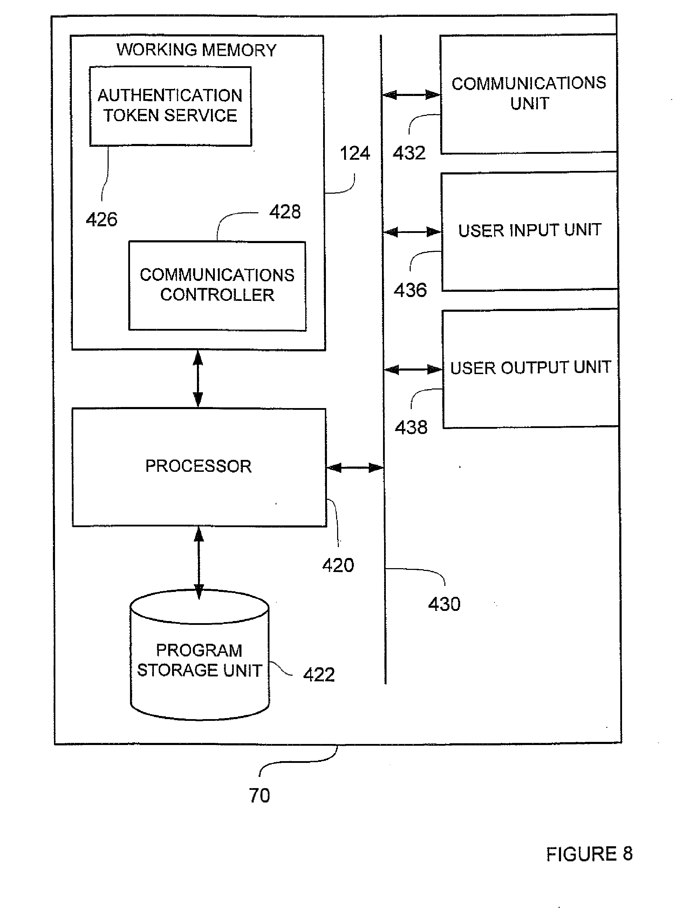

Finally, the framework provider 2 (reference number 70 in figure 1) is illustrated in figure 8. This corresponds almost directly to the architecture of framework provider 1 illustrated in figure 4. Reference numbers are advanced by 200 from that figure.

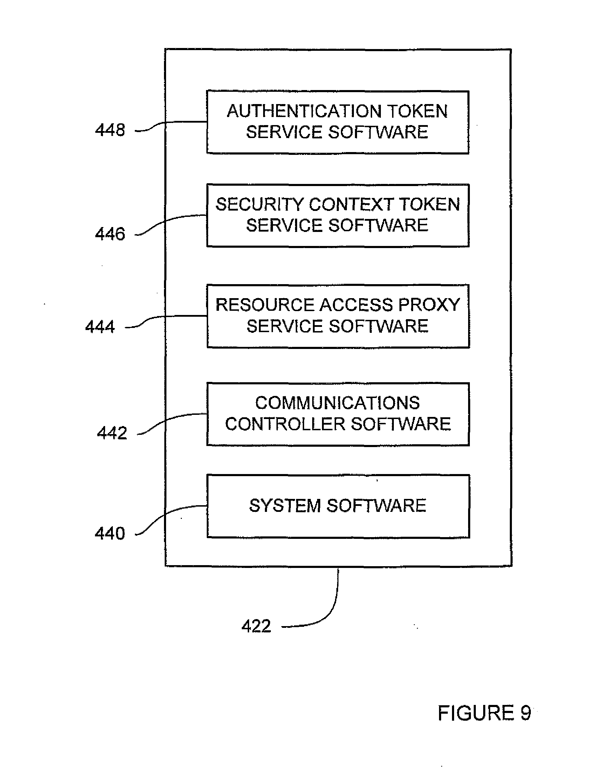

Whereas the framework provider 1 runs an authentication token service 226, the framework provider 2 runs an authentication token service, a security context token service, and a resource access proxy service. These are all reflected by storage of corresponding programs 440-448 in the program storage unit 422 as illustrated in figure 9. Detailed description of the use of these services in pursuit of the example of the invention will be made in due course.

Multiple requests can be made by a resource user at the same time to different resources via the same Resource Access Proxy Service; however, for reasons of clarity, the example described below involves the handling of just one resource request. In a practical case, a single Resource Access Proxy Service might be capable of handling multiple requests from multiple users.

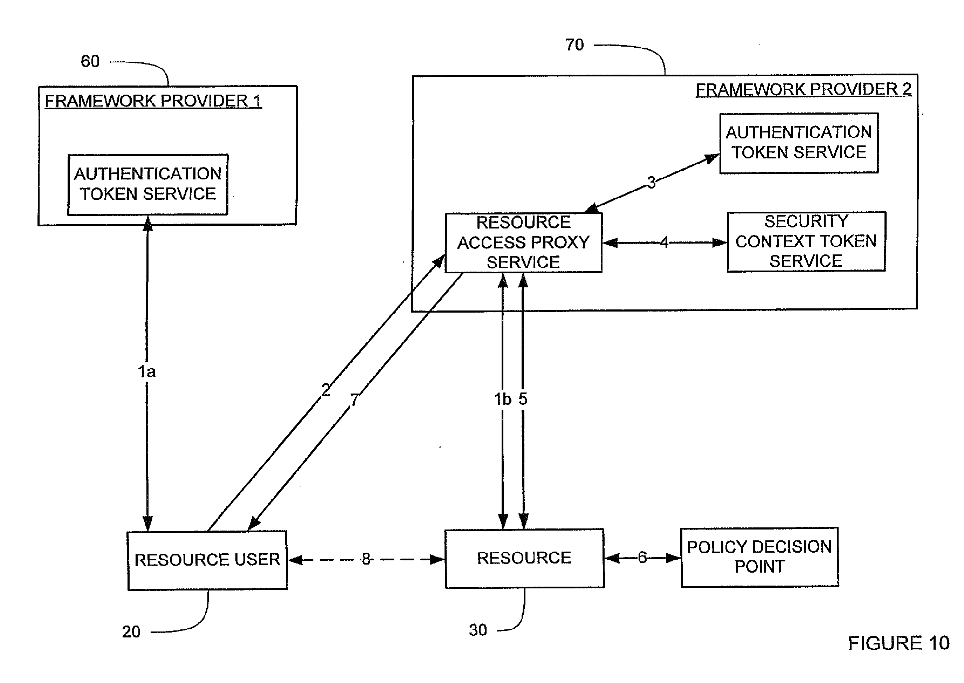

A process of setting up a system in preparation for an access request is illustrated in figure 10. In figure 10, steps (as represented by arrows) are provided with reference numerals which correspond to those used for the description of the actions set out below.

For the purpose of this example, it is assumed that some steps can be performed in advance of an access request, and particularly some need only be done once per session, thus significantly spreading their cost over many requests. Two such steps are particularly important:
1a. Request token issuing - When resource user 20 starts a session (e.g. on start-up of the respective computer terminal) it requests its ID/attribute token for that session. Once received, this is stored by Resource user 20 and can be reused until expiry to access resources without needing to contact its Authentication Token Service again.
1b. Set up security session - When resource 30 is initialised it starts up a secure session with its associated Resource Access Proxy Service, using credentials obtained at registration. Once set up, this secure session can be used for all further communications between them.
2. Request resource access - When the resource user 20 wants to make a request to a new resource, resource 30, it contacts the Resource Access Proxy Service defined for the resource 30. This is carried at the relevant framework provider 70, as previously described. This request will contain the previously obtained ID/attribute token, resource 30's identifier and the request it wishes to make to resource 30. This request needs to be made over a secure session (e.g. SSL/TLS). If this is the first time that Resource user 20 has contacted a Resource Provider in this SENSEI Framework Provider's domain, then this has to be set up before the request is made. For future requests to other Resource Providers in resource 30's domain, this session can be reused, thus significantly reducing the overhead of the request.
3. Request token translation - If this is the first time that the resource user 20 has contacted a Resource Provider in this SENSEI Framework Provider's domain, then resource 30's Resource Access Proxy Service firstly needs to translate resource user 20's ID/attribute token into one suitable for use in resource 30's SENSEI Framework Provider's domain. It does this by making use of the Authentication Token Service. If resource user 20 has already contacted this domain before then this step may be omitted as it would be assumed that the token provided was already in the correct format.
4. Request token issuing - The next step is to generate a security context token for resource user 20's session with resource 30. This token will contain all the key material, algorithm identifiers etc needed for resource user 20 and resource 30 to communicate securely in future requests without needing to perform the overhead required in negotiating a secure session. It is important to note that this step need not be done in order with the other steps and could even be done after the result of the RAI query is returned to resource user 20 to improve response time. It is given in sequence here for ease of description.
5. Resource request on behalf of resource user - Next, the Resource Access Proxy Service makes resource user 20's request on its behalf to resource 30. This request contains resource user 20's (translated) ID/attribute token and makes use of the previously set up secure session and is therefore relatively efficient. In addition, resource 30 does not need to validate the token as it can trust the Resource Access Proxy Service to have done this, further reducing the overhead.
6. Authorisation request - Resource 30 passes the ID/attributes from the provided token (or the token itself) to its associated policy decision point (PDP) together with the resource request and any associated context. The PDP Service then evaluates its policies and returns a decision as to whether the request should be authorised. Assuming the request is authorised, the result is returned back to the Resource Access Proxy Service.
   In a practical embodiment, the PDP could be hosted on the resource itself, on the framework provider, or in an entirely separate network location. The performance of the present embodiment of the invention is not dependent on any one implementation.
7. Return result to user - Finally, the generated data is returned to resource user 20. This will consist of the results of its first request to resource 30, the translated ID/attribute token (if generated), and the security context tokens (one each for resource user 20 and resource 30). The resource user 20 will store these for future use.
8. Further queries and responses - Any future requests to resource 30 from resource user 20 can be made directly to resource 30 making use of the security context tokens to authenticate and protect the request and response. Resource user 20's ID/attribute token can be provided during this request, or, more efficiently, resource user 20's rights can be determined implicitly or explicitly from the contents of the security context token (for example, the security context token could contain resource user 20's ID/attributes).

An exemplary implementation of the above steps will now be described to illustrate the example to the reader.

The Resource Access Proxy Service can be implemented as a Web Service. A REST-based HTTP Web Service is in many ways in keeping with the lightweight approach, but other approaches may be used (e.g. SOAP based).

Existing Authentication Token Services, Security Context Token Services and Resource Providers may require some minor modifications to their interfaces to allow requests to be made by proxy rather than directly from end users. In some implementations, this requirement could be met by simply modifying policy decision making (e.g. in the PDP for Resource Providers, or in WS-SecurityPolicy statements for WS-* based services) and leaving the interface the same.

To make use of Security Context Tokens, the messaging security implementations of resource user 20 and resource 30 may require modification to allow the session security contexts to be loaded from these tokens rather than negotiated with each other. However, implementations of users and Resource Providers that use these tokens already exist (albeit rarely), and these would not require modification.

Interface specifications and implementation notes are included below. From this, a skilled reader will appreciate that appropriate computer programs could be written to provide an implementation of the illustrated example on general purpose computers.

The following acronyms are used throughout the description:
ID - identity
AAA - Authentication Authorisation and Accounting
AE - Accessing Entity (the user requesting access to a resource)
ACE - Access Controlled Entity (in this case, the resource provided by a resource provider)
RP - Resource Provider
STS - Security Token Service (in this case, either an Authentication Token Service or a Security Context Token Service)
SAML - Security Assertion Markup Language

### Resource Access Proxy Service

This service has only one interface (namely Request Resource Access), which is described below.

### Request Resource Access - General Specification

### Inputs:

- Tokens - One or more ID, Attribute or Authorisation Tokens of the AE.
- Resource Requests - This contains a list of the IDs of the Resources the AE wishes to access, together with, for each Resource:
   o The requested action and associated parameters for each (e.g. a value to which a resource is to be set)
   o Optionally, which of the AE's provided Tokens should be used to access the Resource.
   o Whether the returned Security Context Tokens for this Resource should contain the ID, Attributes and/or Authorisations contained within the provided tokens.
- AE Key Material (optional) - Encryption key of the AE, to be used to protect the returned AE Security Context Tokens.
- Type (optional) - This identifies the security session type that a token is required for. For example, SSLv3.
- Token Translation Parameters (optional) - Any additional parameters or conditions on the translated tokens. In particular, this could include key material to include in the translated tokens that will be used to provide proof of possession of the tokens.
- Security Context Token Conditions (optional) - Any conditions to be placed on the generated security session contexts. For example, this could include a preferred SSL cipher suite or an expiry time.

### Outputs:

- Resource Responses - This contains a list of the IDs of the Resources the AE requested access to, together with the associated responses received from those Resources.
- Security Context Tokens - This contains a list of the IDs of the RPs (see notes) associated with the Resources to which the AE requested access, together with an associated RP Security Context Token, or artifact referencing the token, for each. An associated AE token is also provided for each.
- ID, Attribute or Authorisation Tokens (optional) - If, in the request, the AE provided tokens from a domain different from that of the Resource Access Proxy Service, then translated tokens are provided in the response.

### Non-functional requirements:

- Integrity of request and response. Proof of possession of the provided tokens is required. In addition, if key material is provided to be included in the translated tokens, then the AE must prove possession of this key material in the request. In either case, if proof of possession is required, it is left up to implementations as to how this is done (see also notes below).
- Confidentiality of request and response, including authentication (optional) - Needed if requests and resource responses need such protection. It should be noted that Security Context Tokens require such protection. Therefore, depending on implementation, confidentiality protection may be applied directly to the token or will have to be provided to the response.
- Availability of request and response (optional). Needed if availability of resources is important.

### Example implementation

Inputs and outputs may be formatted using an XML schema. For use in REST-based web services, requests and responses can be formatted using an HTTP POST binding, in a very similar way to the SAML HTTP POST binding standard (see "Bindings for the OASIS Security Assertion Markup Language (SAML) V2.0", OASIS Standard, 15 March 2005 (saml-bindings-2.0-os) (hereinafter referred to as "the OASIS Bindings Standard")).

Messages are encoded for use with this binding by encoding the XML into an HTML form control and are transmitted using the HTTP POST method. A Request Resource Access Request or Response message is form-encoded by applying the base-64 encoding rules to the XML representation of the message and placing the result in a hidden form control within a form as defined by Section 17 of the HTML 4.01 Specification (D. Raggett et al. "HTML 4.01 Specification" - World Wide Web Consortium Recommendation, December 1999: http://www.w3.org/TR/html4). The HTML document MUST adhere to the XHTML specification, [XHTML]. The base64-encoded value MAY be line-wrapped at a reasonable length in accordance with common practice.

In the request, the form control can be named RequestResourceAccessRequest. Similarly, in the response, the form control can be named RequestResourceAccessResponse. The action attribute of the form can be the recipient's HTTP endpoint to which the message is to be delivered. The method attribute must be "POST" in this case.

### Non-functional requirements:

- Integrity of request and response- To be provided by underlying SSL session with server authentication. Client authentication can be provided through proof of possession of the supplied token.
- Confidentiality of request and response, including authentication - To be provided by underlying SSL session with server authentication. Client authentication can be provided through proof of possession of the supplied token.
- Availability - Need not require additional measures for many scenarios.

### Notes

It is assumed that AEs will only request access to Resources in the same domain as the Resource Access Proxy Service. For access to resources in other domains they would use the Resource Access Proxy Services from these resources' respective domains.

The Resource Access Proxy Service is only designed to proxy access to RPs and not more general Access Controlled Entities. However, this service may be applicable more widely.

The token provided in the request may be from the AE's domain, or a previously translated token for the Resource Access Proxy Service's domain (if this is different from the AE's domain). It is, however, a requirement that the AE must present a token. As this service is only designed for access by special clients (i.e. not unmodified Web Browsers without scripting or plug-ins) this is an acceptable restriction that will speed up access to resources and simplify the interface.

It may be convenient in many scenarios to provide the Outputs in stages rather than waiting for all resources to respond and sending one large message. However, this is left as implementation dependent.

Multiple Attribute Tokens can be provided if different attributes of the AE are needed to access different resources. Also, for privacy reasons, the AE may want to use only a subset of their attributes to access certain resources.

Artifacts may be returned instead of Security Context Tokens themselves to allow RPs to retrieve these tokens directly.

Access to this service does not require additional controls, such as provision of tokens before an AE is allowed to invoke the service. From the information provided by the AE through the interface, the Resource Access Proxy Service can determine, with the help of the other AAA services it invokes on the AE's behalf, whether it should continue to service their request.

Providing proof of possession of tokens and/or key material can be done in many ways, and often depends on the precise security mechanisms being used to protect communications between the AE and the ACE. For this reason, it is not specified here. For illustration though, examples of how it could be done include implicitly through the interaction model, as used by the SAML "Web Browser SSO Profile" ("Profiles for the OASIS Security Assertion Markup Language (SAML) V2.0", OASIS Standard, 15 March 2005 (saml-profiles-2.0-os)), explicitly through the use of advanced techniques such as SAML's "holder of key" method (SAML v2.0 Holder-of-Key Assertion Profile, Committee Draft 01, 9 March 2009),**Error! Reference source not found.** which ties the token to SSL client authentication, or by signing the message containing the token using the private key associated with a public signature key contained in the token.

### Security Context Token Service

This service has two main interfaces to allow token generation and retrieval.

The first interface allows requests to generate Security Context Tokens to be made. It should be noted by the reader that the following specifications assume Resource Access Proxy Services acting on behalf of an AE are the only parties to request the issuing of such Tokens. However, this service may be applicable more widely.

The second interface allows retrieval of already generated Security Context Tokens. Typically, this would be used by an ACE to retrieve a Token, but may be used by AEs to do so as well.

A further interface, to provide token validation, is also provided, and all three are specified below.

### Request Token Issuing

### General Specification

### Inputs:

- Requestor (optional) - This parameter may not be needed if it is implicit (e.g. from physical connectivity, underlying SSL session etc.).
- Signature (optional) - A digital signature of the Requestor on the request (i.e. this set of "Inputs"). This parameter may not be needed if authentication of the Requestor is implicit (e.g. from physical connectivity, underlying SSL session etc.).
- ID, Attribute and/or Authorisation Tokens (optional) - Tokens of the AE for which the security session context is to be generated for. The ID, Attributes and/or Authorisations contained within the tokens will be incorporated into the returned AE token.
- AE Key Material (optional) - Encryption key of the AE, to be used to protect the returned AE Security Context Token.
- Access Controlled Entity - The ID for the ACE for which the security session context is to be generated for.
- Type (optional) - This identifies the security session type that a token is required for. For example, SSLv3.
- Conditions (optional) - Any conditions to be placed on the generated security session context. For example, this could include a preferred SSL cipher suite or an expiry time.

### Outputs:

- Security Context Tokens - This contains the requested Security Context Tokens, one for the AE and one for the ACE. The contents of the tokens will be the same in general, but will be protected with different key material. An artifact may be returned instead of the AE and/or ACE token to allow retrieval of the token by the AE and/or ACE by reference.

### Non-functional requirements:

- Integrity of request (optional) - Modifications in the request will eventually be detected when an unacceptable token is received (or not), but integrity protection may also be useful to prevent this wasting of resources on the AE and STS. Note that the tokens will be integrity protected and hence the response does not require additional protection unless an artifact is returned. If tokens are provided in the request, then proof of possession of these tokens may be needed by the STS (see notes below for details). If proof of possession is required, it is left up to implementations as to how this is done (see also previous notes).
- Confidentiality of request (optional) - Needed if requesting tokens considered sensitive.
- Confidentiality of response (optional) - Needed to protect key material contained in the tokens if the tokens themselves are not encrypted.
- Availability of request and response (optional) - Needed if availability of resource is important.

### Example implementation

Inputs and outputs may be formatted using an XML schema. For use in REST-based web services, requests and responses can be formatted using an HTTP POST binding as described above. In this case, the form control can be named SAMLRequest. Similarly, in the response the form control can be named SAMLResponse.

### Non-functional requirements:

- Integrity of request and response - To be provided by underlying SSL session with mutual authentication.
- Confidentiality of request and response, including authentication - To be provided by underlying SSL session with mutual authentication.
- Availability - Need not require additional measures for many scenarios.

### Notes

If access control is required for this service, then the tokens provided through the interface may be used for this purpose if proof of possession of these tokens is provided as well. An alternative is that potentially different tokens may be provided before invoking the service via the interface, using a separate mechanism. The key point is that the tokens provided in this interface are primarily related to the ACE the AE wishes to access and not the STS. While the AE may have to or wish to use the same tokens to get access to both services, they, on the other hand, may not.

The ID, Attributes and/or Authorisations from tokens provided by the AE can be incorporated into the Security Context Token generated by the STS for the convenience and efficiency of the ACE. It can receive all the information it needs to make an access policy decision, as well as to secure the resulting session (if access is approved), in one token. Hence, with only one token validation rather than several, the processing overhead is thus reduced, and with one received token rather than several, the communications and message processing overhead is thus reduced. In return, the ACE has to trust the Security Context Token Service or a Resource Access Proxy Service to validate the tokens on its behalf. This makes most sense in the deployment model for the Resource Access Proxy Service, where it is trusted to do this anyway by design, or at least for the AE's first request.

If the Security Context Token Service issues tokens containing AE attributes, then if the original attribute tokens may be revoked, then the service needs to keep track of these and revoke the affected Security Context Tokens that it has issued.

A Security Context Token needs to be transferable in the clear between the AE and ACE - the need for a secure session would defeat the object of such a token. Therefore, the secret key material contained within it needs to be encrypted so that only the AE and ACE it is generated for are able to decrypt it. How this is done depends on who is requesting the token and the contents of the token as described below.

### Tokens containing session key material only

### AE Token

The AE can be provided with the contents in a clear token transferred to them over a secure session between them and the Security Context Token Service via the Resource Access Proxy Service. This is appropriate if the Resource Access Proxy Service is trusted to see the key material contained within the token.

Alternatively, the AE can provide a public encryption key to the Security Context Token Service via the Resource Access Proxy Service, which it uses to encrypt the contents of their token. This is appropriate if the Resource Access Proxy Service is not trusted to see the key material contained within the token, or to reduce the risk of loss of this key material by reducing the number of places it is visible.

### RP Token

A token, protected with the RP's key material, can be provided. In this case, it is assumed, for efficiency, that the Security Context Token Service has previously obtained the RP's encryption key.

Alternatively, an artifact can be returned to allow the RP itself to retrieve the token when needed. In this case, the token itself may not need encrypting if retrieved by the RP over a secure session.

### Tokens containing AE's ID, attributes and/or authorisations as well as session key material

### AE Token

The AE can be provided with the contents in a clear token transferred to them over a secure session between them and the Security Context Token Service via the Resource Access Proxy Service. In this case, the attributes to be included in the generated token must be provided in the associated AE tokens as part of the request, and proof-of-possession of these tokens must be provided by the AE to the Resource Access Proxy Service. The Security Context Token Service has to trust the Resource Access Proxy Service to do this on its behalf.

Alternatively, the AE can provide a public encryption key to the Security Context Token Service via the Resource Access Proxy Service, which it uses to encrypt the contents of their token. In this case, the attributes to be included in the generated token must be provided in the associated AE tokens as part of the request, and proof-of-possession of these tokens must be provided by the AE to the Resource Access Proxy Service. The Security Context Token Service has to trust the Resource Access Proxy Service to do this on its behalf.

As a third alternative, the AE can provide a token containing a public encryption key to the Security Context Token Service via the Resource Access Proxy Service, which it uses to retrieve attributes for and encrypt the contents of their returned token. Note that in this case the request does not need to prove possession of the AE's token as the response does so implicitly.

### RP Token

A token, protected with the RP's key material, can be provided that also contains the AE's attributes. In this case, it is assumed, for efficiency, that the Security Context Token Service has previously obtained the RP's encryption key.

Alternatively, an artifact is returned to allow the RP itself to retrieve the token when needed. In this case, the token itself may not need encrypting if retrieved by the RP over a secure session.

### Request Token Retrieval

### General Specification

In this case, the ACEs can request tokens from the STS by sending a SAML Artifact Resolution Protocol "<ArtifactResolve>" message formatted as per the SAML 2.0 standard (see "Assertions and Protocols for the OASIS Security Assertion Markup Language (SAML) V2.0", OASIS Standard, 15 March 2005 (saml-core-2.0-os)). The Security Context Token Service will respond with an "<ArtifactResponse>" message.

In addition, the SAML 2.0 HTTP Post binding can be used to send the messages, as mostly specified in the OASIS Bindings Standard. Note that the latter does not currently define how to bind Artifact Resolution Protocol messages using HTTP Post, but it is a simple matter to do so. The only additional requirement is that if the message is an ArtifactResolve, then the form control must be named ArtifactResolve, and if the message is an ArtifactResponse, then the form control can be named ArtifactResponse.

### Non-functional requirements:

- Integrity of request (optional) - Modifications in the request will eventually be detected when an unacceptable token is received (or not), but integrity protection may also be useful to prevent this wasting of resources on the requestor and STS. Note that the token will be integrity protected and hence the response does not require additional protection.
- Confidentiality of response - Required to protect key material contained in the token.
- Availability of request and response (optional) - needed if availability of resource is important.

### Request Token Validation

This may be used by ACEs to validate tokens provided by AEs

### General Specification

### Inputs:

- Requestor (optional) - This parameter may not be needed if it is implicit (e.g. from physical connectivity, underlying SSL session etc.).
- Signature (optional) - A digital signature of the Requestor on the request (i.e. this set of "Inputs"). This parameter may not be needed if authentication of the Requestor is implicit (e.g. from physical connectivity, underlying SSL session etc.).
- At least one of:
   o Token (optional) - SAML or other Security Context Token.
   o Token ID (optional) - An ID for the token.

### Outputs:

- Decision - Decision can be:
   o Token Valid
   o Token Invalid - The token has expired, has been revoked, has an invalid signature, is not formatted correctly, etc.
- Reason (optional) - Text to be returned to the AE.

### Non-functional requirements:

- Integrity of request and response - required to ensure that the decision is made on the correct token, and that this decision is returned correctly
- Confidentiality of request and response (optional) - needed if requesting token validation, or tokens themselves, are considered sensitive.
- Availability of request and response (optional) - needed if availability of validation decisions is important.

It should be noted that Authentication Token Services and Security Context Token services are components that exist in other identity federation approaches. Policy Decision Points (PDPs) exist in other policy based access control approaches, and in any case are not essential to the implementation of the invention.

Other aspects, features and advantages of specific embodiments of the invention will no doubt be apparent to the reader of the above description. No part of the above description should be read as limiting the scope of protection, nor implying that any feature is essential to the performance of the invention, and the scope of protection should be deduced only from the claims appended hereto. The claims may be read in the light of the description, but not limited thereby, and with the assistance of the accompanying drawings.

## Claims

1. A method of authorising a request for access by a resource user to a resource in a network domain different from that of the resource user, comprising,
establishing a secure session between the resource user and a resource access proxy in the network;
receiving, at the resource access proxy, an access request from the resource user, the request comprising an attribute token from an issuer controlling access by the resource user to the network;
determining, on the basis of the attribute token, if a previous request has been received from said resource user in the said secure session and, if so then forwarding said request including said attribute token to said resource, otherwise:
translating said attribute token into a format suitable for use in the network domain of the resource;
sending said translated attribute token to said resource user for future use in said session; and
forwarding said request including said translated attribute token to said resource;
the method further including generating a security token on the basis of the request from the resource user to the resource, and sending the security token to the resource user, the security token allowing the resource user to obtain direct access to said resource in a subsequent request.

2. A method in accordance with claim 1 and including
receiving at the resource proxy a result of the request sent to the resource, the request having been authorised by the resource and
sending any data consequent on said request back to said resource user.

3. A method in accordance with claim 2 wherein the request is authorised at the resource by applying a policy decision in accordance with a predetermined policy decision rule.

4. A method in accordance with claim 2 or claim 3 including sending said consequent data, said translated attribute token if generated, and said security token to said resource user in tandem.

5. A method in accordance with any preceding claim wherein said issuer controlling access by said resource user to the network is hosted on a framework provider for the resource user.

6. A method in accordance with any preceding claim wherein said resource access proxy is hosted on a framework provider for the resource.

7. A method of requesting data to be sent from a resource in a network to a resource user in a different domain of the network from the resource, the resource being configured to establish a secure session with a resource access proxy in the network; the method comprising:
obtaining, at the commencement of a session of connectivity of the resource user to the network, an attribute token from an issuer controlling access by the resource user to the network;
establishing a secure session between the resource user and the resource access proxy;
sending a request for access to the resource from the resource user to the resource access proxy, the request including said attribute token;
receiving a message from said resource access proxy containing a translated attribute token suitable for use with the network domain of the resource,
receiving from the resource access proxy a security token on the basis of the request for use in future requests to said resource;
storing said translated attribute token and security token; and
using said security token to achieve direct access to the resource in a subsequent request.

8. A method according to claim 7, comprising receiving the results of the access request from the resource access proxy; and
sending a further request from the resource user directly to the resource using said security token.

9. A resource access proxy for use in controlling access by a resource user of one or more resources in a network, the resource access proxy comprising:
access request receiving means operable to receive a request by a resource user for access to a resource;
request processing means operable to determine if said request contains an attribute token and, if so, whether said attribute token is applicable for use with said resource;
attribute token translation means operable to translate an attribute token not applicable for use with said resource into a translated attribute token applicable for use with said resource;
authorisation means operable to determine if said request for access to said resource should be authorised;
proxy requesting means operable to send a request, on behalf of a resource user, in response to receipt of a request, and authorisation thereof, to a resource; and
security token issuing means operable to issue a security token in response to the request from the resource user, the resource access proxy being operable to send an issued security token back to the requesting resource user such that said resource user can obtain direct access to said resource for a future request.

10. A resource access proxy in accordance with claim 9 wherein said request processing means is operable to determine if said attribute token is a translated attribute token and, if so, to pass said attribute token directly for use by said proxy requesting means.

11. A resource access proxy in accordance with claim 9 or 10 and further comprising response means operable to return data to a requesting resource user.

12. A resource access proxy in accordance with claim 11 wherein, in response to sending the request on behalf of the resource user to the resource, said response means is operable to receive a result of the request from the resource and to return the result to the resource user.

13. A resource access proxy in accordance with claim 11 or claim 12 wherein said response means is operable to return a translated attribute token if generated by said attribute token translation means.

14. A computer program product comprising computer executable instructions operable to cause a computer to perform a method in accordance with any one of claims 1 to 8.

15. A computer program product in accordance with claim 14, and comprising a computer readable medium.

16. A computer program product in accordance with claim 15, and comprising a computer receivable signal.

## Patentansprüche

1. Verfahren zum Genehmigen einer Anforderung für Zugriff durch einen Ressourcenbenutzer auf eine Ressource in einer Netzdomäne, die von der des Ressourcenbenutzers verschieden ist, Folgendes umfassend:
Aufbauen einer sicheren Sitzung zwischen dem Ressourcenbenutzer und einem Ressourcenzugriffs-Proxy im Netz;
Empfangen einer Zugriffsanforderung vom Ressourcenbenutzer am Ressourcenzugriffs-Proxy, wobei die Anforderung ein Attribut-Token von einem Aussteller umfasst, der Zugriff durch den Ressourcenbenutzer auf das Netz steuert;
Bestimmen auf der Basis des Attribut-Tokens, ob eine vorherige Anforderung vom Ressourcenbenutzer in der sicheren Sitzung empfangen wurde und, falls dies der Fall ist, Weiterleiten der das Attribut-Token einschließenden Anforderung an die Ressource, sonst:
Übersetzen des Attribut-Tokens in ein Format, das zur Verwendung in der Netzdomäne der Ressource geeignet ist;
Senden des übersetzten Attribut-Tokens an den Ressourcenbenutzer zur zukünftigen Verwendung in der Sitzung, und
Weiterleiten der das übersetzte Attribut-Token einschließenden Anforderung an die Ressource;
das Verfahren schließt außerdem ein: das Erzeugen eines Sicherheits-Tokens auf der Basis der Anforderung vom Ressourcenbenutzer an die Ressource und das Senden des Sicherheits-Tokens an den Ressourcenbenutzer, wobei das Sicherheits-Token dem Ressourcenbenutzer erlaubt, Direktzugriff auf die Ressourcen in einer nachfolgenden Anforderung zu erhalten.

2. Verfahren nach Anspruch 1 und Folgendes einschließend:
Empfangen eines Ergebnisses der an die Ressource gesendeten Anforderung am Ressourcen-Proxy, wobei die Anforderung von der Ressource genehmigt wurde und
Zurücksenden von der Anforderung nachfolgenden Daten an den Ressourcenbenutzer.

3. Verfahren nach Anspruch 2, worin die Anforderung an der Ressource genehmigt wird, indem eine Policy-Entscheidung gemäß einer vorgegebenen Policy-Entscheidungsregel angewendet wird.

4. Verfahren nach Anspruch 2 oder Anspruch 3, das gemeinsame Senden der Folgenden an den Ressourcenbenutzer einschließend: die nachfolgenden Daten, das übersetzte Attribut-Token, falls es erzeugt wird, und das Sicherheits-Token.

5. Verfahren nach einem vorhergehenden Anspruch, worin der Aussteller, der Zugriff durch den Ressourcenbenutzer auf das Netz steuert, auf einem Gerüstanbieter für den Ressourcenbenutzer gehostet wird.

6. Verfahren nach einem vorhergehenden Anspruch, worin der Ressourcenzugriffs-Proxy auf einem Gerüstanbieter für die Ressource gehostet wird.

7. Verfahren zum Anfordern von Daten, die von einer Ressource in einem Netz an einen Ressourcenbenutzer in einer von der der Ressource verschiedenen Domäne des Netzes zu senden sind, wobei die Ressource dazu konfiguriert ist, eine sichere Sitzung mit einem Ressourcenzugriffs-Proxy im Netz aufzubauen; wobei das Verfahren umfasst:
zu Beginn einer Sitzung von Konnektivität des Ressourcenbenutzers an das Netz das Beschaffen eines Attribut-Tokens von einem Aussteller, der Zugriff durch den Ressourcenbenutzer auf das Netz steuert;
Aufbauen einer sicheren Sitzung zwischen dem Ressourcenbenutzer und dem Ressourcenzugriffs-Proxy;
Senden einer Anforderung für Zugriff auf die Ressource vom Ressourcenbenutzer an den Ressourcenzugriffs-Proxy, wobei die Anforderung das Attribut-Token einschließt;
Empfangen einer Nachricht vom Ressourcenzugriffs-Proxy, die ein übersetztes Attribut-Token enthält, das zur Verwendung mit der Netzdomäne der Ressource geeignet ist,
Empfangen eines Sicherheits-Tokens vom Ressourcenzugriffs-Proxy auf der Basis der Anforderung für Verwendung in zukünftigen Anforderungen an die Ressource;
Speichern des übersetzten Attribut-Tokens und Sicherheits-Tokens; und
Verwenden des Sicherheits-Tokens, um Direktzugriff auf die Ressource in einer nachfolgenden Anforderung zu erzielen.

8. Verfahren nach Anspruch 7, Empfangen der Ergebnisse der Zugriffsanforderung vom Ressourcenzugriffs-Proxy umfassend, und
Senden einer weiteren Anforderung vom Ressourcenbenutzer direkt an die Ressource unter Verwendung des Sicherheits-Tokens.

9. Ressourcenzugriffs-Proxy zur Verwendung beim Steuern von Zugriff durch einen Ressourcenbenutzer von einer oder mehreren Ressourcen in einem Netz, wobei der Ressourcenzugriffs-Proxy umfasst:
Zugriffsanforderungs-Empfangsmittel, betriebsfähig zum Empfangen einer Anforderung durch einen Ressourcenbenutzer für Zugriff auf eine Ressource;
Anforderungsverarbeitungsmittel, betriebsfähig zum Bestimmen, ob die Anforderung ein Attribut-Token enthält, und falls dies der Fall ist, ob das Attribut-Token zur Verwendung mit der Ressource anwendbar ist;
Attribut-Token-Übersetzungsmittel, das betriebsfähig ist, ein Attribut-Token, das zur Verwendung mit der Ressource nicht anwendbar ist, in ein übersetztes Attribut-Token zu übersetzen, das zur Verwendung mit der Ressource anwendbar ist;
Genehmigungsmittel, betriebsfähig zum Bestimmen, ob die Anforderung für Zugriff auf die Ressource genehmigt werden sollte;
Proxy-Anforderungsmittel, betriebsfähig zum Senden einer Anforderung für einen Ressourcenbenutzer an eine Ressource als Antwort auf den Empfang einer Anforderung und deren Genehmigung, und
Sicherheits-Token-Ausgabemittel, betriebsfähig zum Ausgeben eines Sicherheits-Tokens als Antwort auf die Anforderung vom Ressourcenbenutzer, wobei der Ressourcenzugriffs-Proxy betriebsfähig ist, ein ausgegebenes Sicherheits-Token an den anfordernden Ressourcenbenutzer zurückzusenden, sodass der Ressourcenbenutzer direkten Zugriff auf die Ressource für eine zukünftige Anforderung erhalten kann.

10. Ressourcenzugriffs-Proxy nach Anspruch 9, worin das Anforderungsverarbeitungsmittel zum Bestimmen betriebsfähig ist, ob das Attribut-Token ein übersetztes Attribut-Token ist und, falls dies der Fall ist, zum direkten Durchgeben des Attribut-Tokens zur Verwendung durch das Proxy-Anforderungsmittel.

11. Ressourcenzugriffs-Proxy nach Anspruch 9 oder 10 und außerdem ein Antwortmittel umfassend, betriebsfähig zum Zurückgeben von Daten an einen anfordernden Ressourcenbenutzer.

12. Ressourcenzugriffs-Proxy nach Anspruch 11, worin als Antwort auf das Senden der Anforderung für den Ressourcenbenutzer an die Ressource das Antwortmittel betriebsfähig ist, ein Ergebnis der Anforderung von der Ressource zu empfangen und das Ergebnis an den Ressourcenbenutzer zurückzusenden.

13. Ressourcenzugriffs-Proxy nach Anspruch 11 oder Anspruch 12, worin das Antwortmittel betriebsfähig ist, ein übersetztes Attribut-Token zurückzusenden, falls es durch das Attribut-Token-Übersetzungsmittel erzeugt wurde.

14. Computerprogrammprodukt, computerausführbare Anweisungen umfassend, die betriebsfähig sind, einen Computer zu veranlassen, ein Verfahren nach einem der Ansprüche 1 bis 8 auszuführen.

15. Computerprogrammprodukt nach Anspruch 14 und ein computerlesbares Medium umfassend.

16. Computerprogrammprodukt nach Anspruch 15 und ein Signal umfassend, das auf dem Computer empfangbar ist.

## Revendications

1. Procédé d'autorisation d'une demande d'accès par un utilisateur de ressources à une ressource dans un domaine de réseau différent de celui de l'utilisateur de ressources, comprenant les étapes ci-dessous consistant à :
établir une session sécurisée entre l'utilisateur de ressources et une fonction « proxy » d'accès aux ressources dans le réseau ;
recevoir, au niveau de la fonction « proxy » d'accès aux ressources, une demande d'accès en provenance de l'utilisateur de ressources, la demande comprenant un jeton d'attribut provenant d'une entité émettrice commandant l'accès par l'utilisateur de ressources au réseau ;
déterminer, sur la base du jeton d'attribut, si une demande précédente a été reçue à partir dudit utilisateur de ressources dans ladite session sécurisée et, le cas échéant, acheminer ladite demande incluant ledit jeton d'attribut à ladite ressource, et sinon :
traduire ledit jeton d'attribut en le convertissant en un format approprié en vue d'une utilisation dans le domaine de réseau de la ressource ;
envoyer ledit jeton d'attribut traduit audit utilisateur de ressources en vue d'une utilisation ultérieure dans ladite session ; et
acheminer ladite demande incluant ledit jeton d'attribut traduit vers ladite ressource ;
le procédé comprenant en outre l'étape consistant à générer un jeton de sécurité sur la base de la demande de l'utilisateur de ressources à la ressource, et à envoyer le jeton de sécurité à l'utilisateur de ressources, le jeton de sécurité permettant à l'utilisateur de ressources d'obtenir un accès direct à ladite ressource dans le cadre d'une demande subséquente.

2. Procédé selon la revendication 1, comprenant les étapes ci-dessous consistant à :
recevoir, au niveau de la fonction « proxy » d'accès aux ressources, un résultat de la demande envoyée à la ressource, la demande ayant été autorisée par la ressource ; et
renvoyer des données consécutives quelconques sur ladite demande audit utilisateur de ressources.

3. Procédé selon la revendication 2, dans lequel la demande est autorisée au niveau de la ressource par l'application d'une décision de politiques selon une règle de décision de politiques prédéterminée.

4. Procédé selon la revendication 2 ou 3, incluant l'étape consistant à envoyer en tandem lesdites données consécutives, ledit jeton d'attribut traduit, si celui-ci a été généré, et ledit jeton de sécurité, audit utilisateur de ressources.

5. Procédé selon l'une quelconque des revendications précédentes, dans lequel ladite entité émettrice commandant l'accès, par ledit utilisateur de ressources, au réseau, est hébergée sur un fournisseur d'infrastructure de l'utilisateur de ressources.

6. Procédé selon l'une quelconque des revendications précédentes, dans lequel ladite fonction « proxy » d'accès aux ressources est hébergée sur un fournisseur d'infrastructure de la ressource.

7. Procédé de demande d'envoi de données, d'une ressource, dans un réseau, à un utilisateur de ressources dans un domaine du réseau différent de celui de la ressource, la ressource étant configurée de manière à établir une session sécurisée avec une fonction « proxy » d'accès aux ressources dans le réseau ; le procédé comprenant les étapes ci-dessous consistant à :
obtenir, au commencement d'une session de connectivité de l'utilisateur de ressources au réseau, un jeton d'attribut provenant d'une entité émettrice commandant l'accès, par l'utilisateur de ressources, au réseau ;
établir une session sécurisée entre l'utilisateur de ressources et la fonction « proxy » d'accès aux ressources ;
envoyer une demande d'accès à la ressource, de l'utilisateur de ressources à la fonction « proxy » d'accès aux ressources, la demande incluant ledit jeton d'attribut ;
recevoir un message provenant de ladite fonction « proxy » d'accès aux ressources contenant un jeton d'attribut traduit pertinent en vue d'une utilisation avec le domaine de réseau de la ressource ;
recevoir, à partir de la fonction « proxy » d'accès aux ressources, un jeton de sécurité, sur la base de la demande, en vue d'une utilisation dans le cadre de demandes ultérieures à ladite ressource ;
stocker ledit jeton d'attribut traduit et le jeton de sécurité ; et
utiliser ledit jeton de sécurité pour obtenir un accès direct à la ressource dans le cadre d'une demande subséquente.

8. Procédé selon la revendication 7, comprenant les étapes consistant à recevoir les résultats de la demande d'accès à partir de la fonction « proxy » d'accès aux ressources ; et
envoyer une demande supplémentaire, de l'utilisateur de ressources directement à la ressource, en utilisant ledit jeton de sécurité.

9. Fonction « proxy » d'accès aux ressources destinée à être utilisée dans la cadre de la commande d'un accès par un utilisateur de ressources d'une ou plusieurs ressources dans un réseau, la fonction « proxy » d'accès aux ressources comprenant :
un moyen de réception de demandes d'accès exploitable de manière à recevoir une demande émise par un utilisateur de ressources pour l'accès à une ressource ;
un moyen de traitement de demandes exploitable de manière à déterminer si ladite demande contient un jeton d'attribut et, le cas échéant, si ledit jeton d'attribut est applicable en vue d'une utilisation avec ladite ressource ;
un moyen de traduction de jetons d'attribut exploitable de manière à traduire un jeton d'attribut non applicable en vue d'une utilisation avec ladite ressource en un jeton d'attribut traduit applicable en vue d'une utilisation avec ladite ressource ;
un moyen d'autorisation exploitable de manière à déterminer si ladite demande d'accès à ladite ressource devrait être autorisée ;
un moyen de demande de fonction « proxy » exploitable de manière à envoyer une demande, au nom d'un utilisateur de ressources, en réponse à la réception d'une demande, et d'une autorisation de celle-ci, à une ressource ; et
un moyen d'émission de jetons de sécurité exploitable de manière à émettre un jeton de sécurité en réponse à la demande provenant de l'utilisateur de ressources, la fonction « proxy » d'accès aux ressources étant exploitable de manière à renvoyer un jeton de sécurité émis, à l'utilisateur de ressources demandeur, de sorte que ledit utilisateur de ressources peut obtenir un accès direct à ladite ressource dans le cadre d'une demande ultérieure.

10. Fonction « proxy » d'accès aux ressources selon la revendication 9, dans laquelle ledit moyen de traitement de demandes est exploitable de manière à déterminer si ledit jeton d'attribut est un jeton d'attribut traduit et, le cas échéant, à transmettre ledit jeton d'attribut directement en vue d'une utilisation par ledit moyen de demande de fonction « proxy ».

11. Fonction «proxy» d'accès aux ressources selon la revendication 9 ou 10, comprenant en outre un moyen de réponse exploitable de manière à renvoyer des données à un utilisateur de ressources demandeur.

12. Fonction « proxy » d'accès aux ressources selon la revendication 11, dans lequel, en réponse à l'envoi de la demande, au nom de l'utilisateur de ressources, à la ressource, ledit moyen de réponse est exploitable de manière à recevoir un résultat de la demande en provenance de la ressource, et à renvoyer le résultat à l'utilisateur de ressources.

13. Fonction «proxy» d'accès aux ressources selon la revendication 11 ou 12, dans lequel ledit moyen de réponse est exploitable de manière à renvoyer un jeton d'attribut traduit, si celui-ci a été généré par ledit moyen de traduction de jetons d'attribut.

14. Produit-programme informatique comprenant des instructions exécutables par ordinateur, exploitables de manière à amener un ordinateur à mettre en oeuvre un procédé selon l'une quelconque des revendications 1 à 8.

15. Produit-programme informatique selon la revendication 14, comprenant un support lisible par ordinateur.

16. Produit-programme informatique selon la revendication 15, comprenant un signal pouvant être reçu par un ordinateur.
